# NEUE EUROPÄISCHE PATENTSCHRIFT

(11) **EP 1 380 485 B2**
(45) Veröffentlichungstag und Bekanntmachung des Hinweises auf die Entscheidung über den Einspruch: **30.11.2011**
(45) Hinweis auf die Patenterteilung: 01.10.2008
(21) Anmeldenummer: 03014557.7
(22) Anmeldetag: 07.07.2003
(51) Int. Cl.: B60T 10/02

(54) **Verfahren zur Begrenzung der Bremswirkung eines Retarders in Abhängigkeit von der Temperatur**
Method for the limitation of the braking action of a retarder depending on the temperature
Procédé pour limitation controllée de freinage d'un ralentisseur en fonction de la température

(30) Priorität: 12.07.2002 DE 10231610
(43) Veröffentlichungstag der Anmeldung: 14.01.2004
(73) Patentinhaber: ZF Friedrichshafen AG, 88038 Friedrichshafen (DE)
(72) Erfinder: Reisch, Bernhard, 88316 Isny (DE); Schmidtner, Peter, 88131 Lindau (DE); Sauter, Frank, 88074 Meckenbeuren (DE)

(56) Entgegenhaltungen:
- EP-A- 0 873 925
- DE-A- 10 009 959
- DE-A- 10 036 517
- DE-A1- 19 716 919
- DE-C- 19 848 546

## Beschreibung

Die vorliegende Erfindung betrifft ein Verfahren zur Begrenzung der Bremswirkung eines Retarders in Abhängigkeit von der Temperatur gemäß dem Oberbegriff des Patentanspruchs 1.

Heutzutage werden insbesondere bei LKW's und Bussen verschleißfreie Bremsen in Form von Retardern eingesetzt. Hierbei wird die im Bremsbetrieb vom Retarder erzeugte Wärme abgeführt, so dass eine Überhitzung und folglich eine Beschädigung des Retarders vermieden wird.

Üblicherweise wird die vom Retarder erzeugte Wärme mittels eines Kühlmediums abgeführt und nach bekannter Art und Weise an die Umgebung abgegeben. Als Kühlsystem für den Retarder wird oft das ohnehin vorhandene Kühlsystem für den Antriebsmotor des Fahrzeugs eingesetzt. Hierbei kann es jedoch zu einer Überhitzung des Kühlmediums kommen, was in Motorschäden resultieren kann.

Aus diesem Grunde ist vorgeschlagen worden, die Temperatur des Kühlmediums kontinuierlich zu überwachen und bei Überschreitung eines vorbestimmten Grenzwertes für die Temperatur die Bremswirkung des Retarders entsprechend zu begrenzen.

Die EP 0 873 925 A2 offenbart ein Verfahren zur geregelten Begrenzung der Bremswirkung eines Retarders, bei dem die während des Bremsbetriebs erzeugte Wärme mit Hilfe eines Kühlmittels eines Kühlsystems abgeführt wird, wobei die geregelte Begrenzung der Bremswirkung mindestens nach Erreichen einer bestimmten Temperatur einsetzt, wobei diese Temperatur in Abhängigkeit vom zeitlichen Temperaturverlauf des Kühlmediums und/oder Arbeitsmediums des Retarders so gewählt wird, dass die Kühlleistung des Kühlsystems maximal ausgenutzt wird. Hierbei kann die vorbestimmte Temperatur durch die Gehäusetemperatur des Retardergehäuses, die Stellung des Thermostaten im Kühlkreislauf, oder beispielsweise durch die Lüfterdrehzahl oder die Wasserpumpendrehzahl beeinflusst werden.

Bei dieser Vorgehensweise kann es aufgrund einer Störung in einem die vorbestimmte Temperatur beeinflussende Größe bzw. Einheit zu einer Überhitzung des Systems kommen.

Der vorliegenden Erfindung liegt die Aufgabe zugrunde, ein Verfahren zur Begrenzung der Bremswirkung eines Retarders in Abhängigkeit der Temperatur des Kühlmediums anzugeben, welches die Nachteile des Standes der Technik vermeidet. Insbesondere soll das erfindungsgemäße Verfahren einen sicheren und weitgehend störungsunabhängigen Betrieb des Retarders ermöglichen.

Diese Aufgabe wird durch die Merkmale des Patentanspruches 1 gelöst. Weitere Varianten und Vorteile gehen aus den Unteransprüchen hervor.

Demnach wird vorgeschlagen, ausgehend von einer vorgegebenen und zeitlich konstanten Grenztemperatur für das Kühlmedium, die Begrenzung der Bremswirkung mittels einer Regelung und/oder Steuerung nach Erreichen dieser Grenztemperatur θmax durchzuführen, wobei die Bremswirkung Mᵣₑₜ des Retarders in Abhängigkeit von dem Temperaturgradienten des Kühlmediums begrenzt wird und wobei die Form der Rückregelkurve oder der Steuerkurve mittels einer Vorausberechnung der vorhandenen Kühlleistung über eine Modellbildung oder durch Auswertung von für den Verlauf der Kühlmediumtemperatur relevanten Parametern bestimmt wird.

Dadurch die Veränderung der Rückregelkurven bzw. der Steuerkurven in Abhängigkeit von der Temperatur des Kühlmediums wird eine maximale Retarderbremswirkung erzielt.

Erfindungsgemäß wird also im Rahmen einer ersten Variante des Verfahrens bei einer fest definierten Temperatur eine Regelung durchgeführt, bei der die Temperatur die Regelgröße und die Bremswirkung des Retarders die Stellgröße darstellen. Insbesondere ist gemäß der Erfindung die Form der Rückregelkurve nach Erreichen der Grenztemperatur vom Gradienten der Kühlmediumtemperatur abhängig, so dass für den Fall eines schnellen Temperaturanstiegs die Retarderbremswirkung frühzeitig stark begrenzt wird, und für den Fall eines langsamen Temperaturanstiegs die Retarderbremswirkung schwach begrenzt wird.

Gemäß der Erfindung ist vorgesehen, die Form der Rückregelkurve durch eine Vorausberechnung der vorhandenen Kühlleistung über eine geeignete Modellbildung zu bestimmen. Alternativ dazu ist es möglich, die vorhandene Kühlleistung durch Auswertung von für den Verlauf der Kühlmediumtemperatur relevanten Parametern, wie beispielsweise Lufttemperatur oder Veränderung der Wassertemperatur im Bremsbetrieb zu bestimmen.

Es ist im Rahmen der Erfindung auch vorgesehen, den gesamten Bereich der möglichen Temperaturgradienten in Form eines Kennfeldes oder mittels Kennlinien zusammenzufassen.

Das erfindungsgemäße Verfahren kann bei jeder Art von Retardern eingesetzt werden, beispielsweise bei elektrischen oder hydrodynamischen Retardern mit eigenem Kühlmediumkreislauf oder bei Retardern mit einem mit dem Antriebsmotor oder weiteren Komponenten eines Kraftfahrzeugs gemeinsamen Kühlmediumkreislauf.

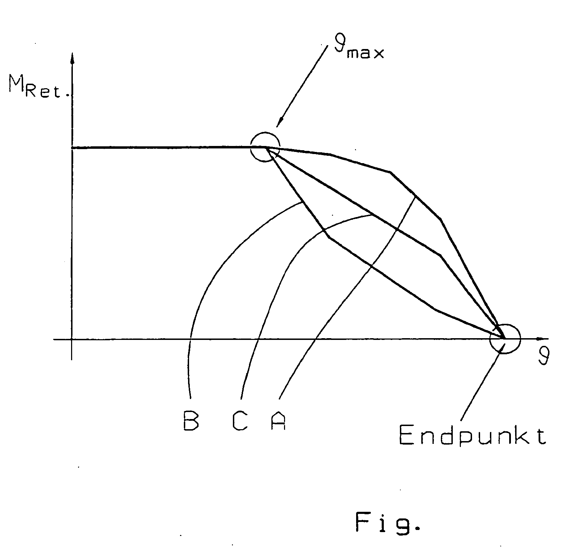

Die Erfindung wird im folgenden anhand der beigefügten Figur näher erläutert, welche den Verlauf der Retarderbremswirkung als Funktion der Temperatur des Kühlmittels für unterschiedliche Temperaturgradienten darstellt.

Gemäß der Erfindung wird eine Regelung der Retarderbremswirkung durchgeführt, wenn eine vorgegebene Grenztemperatur des Kühlmediums θmax erreicht wird, wobei die Form der Rückregelkurve, also der Verlauf der Retarderbremswirkung Mᵣₑₜ als Funktion der Temperatur nach dem Erreichen der Temperatur θmax, eine Funktion des Temperaturgradienten ist.

Hierbei wird vorzugsweise die Rückregelkurve durch eine Vorausberechnung der vorhandenen Kühlleistung über eine Modellbildung bestimmt. In der Figur stellt die Kurve A beispielhaft den Verlauf der Retarderbremswirkung Mᵣₑₜ für den Fall, dass die Temperatur oberhalb der Grenztemperatur ist, aber konstant bleibt. Dahingegen stellt die Kurve B den Verlauf der Retarderbremswirkung für den Fall einer maximalen Temperaturänderung als Funktion der Zeit, also eines maximalen Temperaturgradienten dar. Die Kurve C veranschaulicht die Regelung der Retarderbremswirkung für den Fall eines mittleren Temperaturgradienten. Wie aus der Figur ersichtlich, wird bei einem Schnellanstieg der Temperatur, also bei einem steilen Temperaturgradienten eine stärkere Begrenzung der Retarderbremswirkung durchgeführt; bei einem langsamen Anstieg der Temperatur wird dementsprechend schwächer begrenzt.

Die einzelnen Rückregelkurven können auch in ein Kennfeld zusammengefasst sein, welches den gesamten Bereich der möglichen Temperaturgradienten abdeckt.

Gemäß dem erfindungsgemäßen Verfahren kann vorgesehen sein, dass die Abschalttemperatur des Retarders eine Funktion des Temperaturgradienten des Kühlmediums ist. Dies bedeutet, dass mit geeigneten Rückregelkurven die Abschalttemperatur des Retarders, also die Temperatur, bei der die Retarderbremswirkung den Wert Null annimmt (Endpunkt der Kurve), flexibel gestaltbar ist, so dass unterschiedliche Rückregelkurven zu unterschiedlichen Retarderabschalttemperaturen führen.

Im Rahmen einer weiteren Variante des erfindungsgemäßen Verfahrens ist vorgesehen, zur Bestimmung der Rückregelkurven mathematische Formeln einzusetzen, welche Kurven (z.B. Polynome) oder Flächen beschreiben. Zudem kann alternativ zu einer Regelung eine Steuerung der Retarderbremswirkung durchgeführt werden.

## Patentansprüche

1. Verfahren zur Begrenzung der Bremswirkung eines Retarders, bei dem ein Kühlsystem mit einem Kühlmedium eingesetzt wird, wobei die Begrenzung der Bremswirkung mittels einer Regelung und/oder Steuerung nach Erreichen einer vorgegebenen Temperatur θmax durchgeführt wird, **dadurch gekennzeichnet, dass** die vorgegebene Temperatur θmax eine zeitlich konstante Grenztemperatur für das Kühlmedium ist und bei dieser Grenztemperatur beginnend die Form der Rückregelkurve zur Begrenzung der Bremswirkung Mᵣₑₜ des Retarders von dem Temperaturgradienten des Kühlmediums abhängig ist, so dass bei einem steilen Temperaturgradienten eine stärkere Begrenzung der Retarderbremswirkung durchgeführt wird und bei einem langsamen Anstieg der Temperatur eine schwächere Begrenzung erfolgt, wobei die Form der Rückregelkurve oder der Steuerkurve mittels einer Vorausberechnung der vorhandenen Kühlleistung über eine Modellbildung oder durch Auswertung von für den Verlauf der Kühlmediumtemperatur relevanten Parametern bestimmt wird.

2. Verfahren nach Anspruch 1, **dadurch gekennzei chnet**, dass die Rückregelkurven oder die Steuerkurven in einem Kennfeld zusammengefasst sind, welches den gesamten Temperaturgradientenbereich abdeckt.

3. Verfahren nach Anspruch 1 oder 2, **dadurch geken nzeichnet**, dass die Abschalttemperatur des Retarders eine Funktion des Temperaturgradienten des Kühlmediums ist.

## Claims

1. Method for retarder braking-effect limitation using a cooling system with a cooling medium, with braking-effect limitation being realized through feedback control and/or control at a specified temperature θₘₐₓ, **characterized in that** the specified temperature θₘₐₓ is a temporally constant limiting temperature for the cooling medium and, starting at this limiting temperature, the form of the feedback control curve for limiting the braking effect Mᵣₑₜ of the retarder is dependent on the temperature gradient of the cooling medium, with the result that more pronounced retarder braking-effect limitation is carried out in the case of a steep temperature gradient and less pronounced limitation takes place in the case of a slow rise in the temperature, with the form of the feedback control curve or the control curve being determined through advance calculation of the available cooling performance based on modeling, or through analysis of parameters relevant for the course of the cooling medium temperature.

2. Method according to claim 1, **characterized in that** the feedback control curves or the control curves are united in a map covering the entire temperature gradient range.

3. Method according to claim 1 or 2, **characterized in that** the retarder shutoff temperature is a function of the temperature gradient of the cooling medium.

## Revendications

1. Procédé de limitation de l'effet de freinage d'un ralentisseur, dans lequel est utilisé un système de refroidissement avec un liquide de refroidissement, la limitation de l'effet de freinage étant exécutée à l'aide d'un réglage et/ou d'un pilotage après avoir atteint une température prédéfinie θₘₐₓ, **caractérisé en ce que** la température prédéfinie θₘₐₓ est une température limite constante en fonction du temps pour le liquide de refroidissement et à partir de cette température limite la forme de la courbe de régulation régressive pour la limitation de l'effet de freinage Mᵣₑₜ du ralentisseur est dépendante du gradient de température du liquide de refroidissement, de telle sorte qu'en cas de gradient de température abrupt une plus forte limitation de l'effet de freinage du ralentisseur soit effectuée et qu'en cas d'augmentation lente de la température une plus faible limitation ait lieu, la forme de la courbe de régulation régressive ou de la courbe de pilotage étant déterminée à l'aide d'un calcul prévisionnel de la puissance de refroidissement disponible par l'intermédiaire d'une modélisation ou par l'évaluation de paramètres pertinents concernant l'allure de la température du liquide de refroidissement.

2. Procédé selon la revendication 1, **caractérisé en ce que** les courbes de régulation régressive ou les courbes de pilotage sont regroupées dans une cartographie, celle-ci couvrant toute la plage du gradient de température.

3. Procédé selon la revendication 1 ou 2, **caractérisé en ce que** la température de coupure du ralentisseur est une fonction du gradient de température du liquide de refroidissement.
